# EUROPEAN PATENT SPECIFICATION

(11) **EP 3 631 326 B1**
(45) Date of publication and mention of the grant of the patent: **11.12.2024**
(21) Application number: 17725230.1
(22) Date of filing: 22.05.2017
(51) Int. Cl.: B29C 51/10, B29C 51/42, B29K 23/00, B29K 509/00, F25D 23/06, B29C 51/00

(54) **REFRIGERATOR APPLIANCE HAVING AT LEAST ONE INNER PLASTIC LINER AND METHOD FOR MANUFACTURING THE LINER**
KÜHLSCHRANKGERÄT MIT MINDESTENS EINER KUNSTSTOFFINNENAUSKLEIDUNG UND VERFAHREN ZUR HERSTELLUNG DER AUSKLEIDUNG
APPAREIL DE RÉFRIGÉRATION COMPORTANT AU MOINS UNE CHEMISE INTÉRIEUR EN PLASTIQUE ET PROCÉDÉ DE FABRICATION DE LA CHEMISE

(43) Date of publication of application: 08.04.2020
(73) Proprietor: Electrolux Appliances Aktiebolag, 105 45 Stockholm (SE)
(72) Inventor: CECCHINI, Corrado, 33080 Porcia PN (IT); DE LUCA, Gilda, 33080 Porcia PN (IT); FABBRO, Luca, 33080 Porcia PN (IT); SANITA', Massimo, 33080 Porcia PN (IT); BASSAN, Alfredo, 33080 Porcia PN (IT)
(74) Representative: Electrolux Group Patents
(86) International application number: PCT/EP2017/062269
(87) International publication number: WO 2018/215045

(56) References cited:
- EP-A1- 0 589 033
- EP-A1- 1 787 790

## Description

The present invention relates to a refrigerator appliance having at least one plastic liner, in particular a cabinet liner or a door liner, defining an inner compartment, and to a method for manufacturing such a refrigerator appliance and specifically the liner.

Refrigerator appliances (refrigerators and freezers) have one or more internal compartments, formed in the main refrigerator cabinet and possibly in the door(s) and usually defined by plastic liners.

Refrigerator cabinet and door liners commonly have a relatively complex shape, in order to provide support for shelves and to house electrical and electronic components such as fans, switches, lamps, etc.

Thus, refrigerator liners are advantageously manufactured by thermoforming, especially vacuum forming. In fact, thermoforming is recognized to offer significant advantages for the manufacture of large parts and, on the base of costs, it represents a convenient technology in comparison with other technologies, such as injection moulding.

Thermoforming is a manufacturing process where a plastic sheet is heated up to a forming temperature, formed into a specific shape in a mold, and trimmed to create a product. The sheet is heated (for example, in an oven) to a temperature such that the sheet can be stretched into or onto a mold and cooled to a finished shape. In vacuum forming, the sheet of plastic (heated to the forming temperature) is forced against the mold by a vacuum (suction of air).

Liners for refrigerators and freezers are almost exclusively produced by thermoforming, in particular by positive forming (or male forming).

Such a manufacturing method assures the dimensional stability required for positioning of shelves and other components. Moreover, the quality of the inner surface of the liner can be easily controlled by using a suitable mould. Finally, the industrialization of the process usually guarantees short production cycles and high repeat accuracy. On the other side, even if the male forming technology is basically simpler from the structural/mechanical point of view (requiring simpler equipment) when compared to female forming technology, in case of materials difficult to process (such as, generally speaking, semi-crystalline materials), it requires an increase of process complication, mainly connected to the necessity of a proper support of the sheet in the pre-stretching/blowing step (while in the female technology, such a complication is avoided by the fact that the sheet is supported by the female mould part), and that only a broad thermoforming window can assure.

Usually amorphous polymers have a broad thermoforming windows and semi-crystalline materials presents narrow ranges of temperature for transformation. For this reason large thermoformed parts, like refrigerator inner liners, are produced nowadays exclusively with amorphous polymers, in particular HIPS (high-impact polystyrene) and ABS (acrylonitrile-butadiene-styrene). None of the commercially available appliance is currently produced with a semi-crystalline polymer such as polypropylene (PP), precisely isotactic polypropylene.

ABS has an excellent thermoformability, but it has also a relatively high cost; hence, HIPS, which is however suitable to produce complex-shape articles and highly detailed parts, is currently the most used polymers for refrigerator liners.

The main drawback of HIPS is a relatively low resistance to chemical aggression by detergents and oils. In comparison with HIPS, PP presents lower cost and better chemical resistance to common food staffs like vegetable oils; therefore, the attempt to thermoform PP for refrigerator liners has been extensively tested.

PP is usually used in many thin-gage thermoforming applications but efforts to produce large and deep parts with competitive cycle times have been useless. In fact, PP is a semi-crystalline polymer having a high degree of crystallinity and features a limited thermoforming window and poor strength at high temperature. At thermoforming temperature polymers change rapidly from a brittle, glass-like condition to a rubbery phase and then changes abruptly from the rubbery solid to a melted liquid in a few degrees: thermoforming can be performed only within a very narrow temperature processing window, corresponding to the rubbery phase. Moreover, the rubbery solid has a poor melt strength.

The processing cycle time for obtaining the inner liner of a refrigerator or freezer (i.e. the time required for producing an inner liner of a refrigerator or freezer) using PP is significantly longer in comparison with using HIPS, because of the higher heating energy required to bring the material to the forming temperature (it is known that, generally speaking, the amount of energy required to heat a crystalline or semi-crystalline polymer materials up to the forming temperature is dramatically higher when compared with amorphous polymers). For the same reason, a longer cooling step is also required in order to remove the additional energy added during the heating.

Again as a consequence of the crystalline nature of PP, only a limited control is possible on the final product shape, resulting in an uneven wall thickness and distortion of the shaped parts.

To sum up, thermoforming of PP materials remains extremely difficult and in the field it is not yet known a fully satisfactory method which permits to effectively replace known materials such as HIPS and ABS in the manufacture of refrigerator inner liners by thermoforming.

EP0589033A1 discloses a thermoformable polypropylene-based sheet. This document discloses the use of propylene-ethylene copolymers, polyethylene and ethylene vinyl acetate to produce refrigerator liners.

EP1787790A1 discloses a method for forming a thermoplastic composite.

It is an object of the present invention to overcome the aforementioned drawbacks, in particular by providing a refrigerator appliance with at least one inner plastic liner manufactured by thermoforming in an efficient and cost-effective manner.

It is a specific object of the invention to provide an efficient and cost-effective method for manufacturing a refrigerator cabinet or door liner by thermoforming.

It is a further specific object of the invention to provide a polymer material suitable for replacing traditional materials such as HIPS and ABS in the manufacture of refrigerator inner liners by thermoforming.

Accordingly, there is provided a refrigerator appliance having at least one plastic liner, in particular a cabinet liner or a door liner, defining an inner compartment, as claimed in Claim 1; and a method for manufacturing a liner of a refrigerator appliance as defined in Claim 12.

Preferred aspects and further features of the invention are claimed in the dependent claims.

In general terms, the present invention provides an improved polypropylene-based material for thermoforming plastic liners (cabinet liners and door liners) of refrigerator appliances. The material basically comprises a polypropylene copolymer (namely, a propylene-ethylene copolymer, preferably comprising polypropylene as a main component, i.e. having at least 50% w/w of propylene units), optionally compounded with a filler (for example talc or calcium carbonate or kaolin clay); and a polymer having a crystalline portion, chosen between PE (in particular HDPE) or EVA.

As already remarked, PP typically features a limited range of temperature for thermoforming, and the rubbery heated polymer requires a careful control of the sheet temperature even for forming thin-gage parts.

According to the invention, thermoforming behavior and melt strength of PP is improved by chemical copolymerization with ethylene molecules to produce a propylene-ethylene copolymer; and by mixing the propylene-ethylene copolymer with at least another polymer to produce a physical blend of said polymer and the propylene-ethylene copolymer.

According to the invention, the polymer blended with the ethylene-propylene copolymer is selected in the group consisting of PE and EVA.

In other words, the material of the invention is a physical blend or mixture of a propylene-ethylene copolymer and either a substantially crystalline or semi-crystalline polymer (i.e. a polymer which is at least partly crystalline), PE or EVA.

According to the invention, thermoforming characteristics of PP are improved both by producing chemical modifications of the PP backbone, in particular obtained by copolymerization with ethylene fractions, i.e. by introducing ethylene units into the polypropylene main chain to obtain a propylene-ethylene copolymer (PP copolymer); and by mixing the PP copolymer with another specifically selected polymer.

The propylene-ethylene copolymers of the invention can be either block copolymers (where ethylene co-monomer units are arranged in regular patterns called blocks along the polypropylene chain) or random copolymers (where the co-monomer units are arranged in irregular or random patterns along the polypropylene chain).

Both block and random propylene-ethylene copolymers feature a lower crystallinity in comparison to polypropylene homopolymer.

The propylene-ethylene copolymer is optionally added with one or more fillers, in particular a mineral filler having a lamellar or fibrolamellar structure, for example talc, or a granular filler such as calcium carbonate.

According to the invention, thermoforming behavior of the propylene-ethylene copolymer is further improved by a physical blending (mixing) with at least one crystalline or semi-crystalline polymer, in particular polyethylene (PE) or ethylene vinyl acetate (EVA).

The blend material of the invention has therefore a polymer portion (i.e. resin fraction, including the PP copolymer and any other polymer) and possibly a filler/additive portion (comprising in particular one or more filler, for example one or more of talc, kaolin clay, calcium carbonate; and possibly additives).

Preferably, but not necessarily, materials according to the invention have a polymer portion (resin fraction) ranging between about 95 and 50 phc (parts per hundred compound) and a filler/additive portion ranging between about 5 and 50 phc.

The polymer portion of the blend material comprises: PP copolymer from 77 to 50 phr (parts per hundred resin); and PE or EVA from 23 to 50 phr.

Blending the ethylene-propylene copolymer with an amount of one of the other polymer mentioned above, enhances polypropylene thermoformability, resulting in a better sag resistance and improved mechanical properties at the forming temperature. Furthermore, improved material properties at low temperature (better impact and reduced brittleness) are also achieved, which are interesting features for refrigerators and freezers.

Polypropylene is a semi-crystalline material and, in order to reach the temperature at which it is a rubber-like solid, a large amount of heat needs to be provided. Since polymer materials usually feature very poor heat exchange capacity, long heating and cooling steps are required for material forming. Moreover, due to the difficulty of dissipating heat evenly within the formed part, recrystallization may be so slow that the part is released from the mould surface, before it has fully crystallized. The results of this early release are part distortion and warpage. For this reason mineral fillers, like talc, kaolin clay or calcium carbonate, are compounded with the polymer blend and their dosage, ranging from 5 to 50 phc, can shorten production cycles and yield improved stiffness at thermoforming temperatures.

The characteristics of the polymer mixed with the PP copolymer are mainly selected according to the melting temperature and crystallization temperature.

Advantageously, the polymer blended with the ethylene-propylene copolymer is a high density polyethylene (HDPE).

Surprisingly, blends of a PP copolymer and HDPE can withstand thermoforming process of large parts, such us refrigerator inner liners, both during the heating phase and during the cooling step of the process.

For example, a material obtained compounding 60 phc of PP block copolymer, 20 phc of HDPE and 20 phc of talc has been tested for producing a thermoformed freezer liner. The mould was kept at 100°C during all the thermoforming cycles and the resulting part is a well formed liner with perfectly formed details.

Similar good results were obtained by changing the composition of the blend material, i.e. the amount of PP copolymer, polymer and filler(s); and by using, instead of HDPE, other grades of PE (for example, linear low density polyethylene, LLDPE), or EVA.

The main advantage achieved by the invention with respect to the prior art, in particular to use of HIPS, is a significant cost reduction, while maintaining substantially a comparable productivity and enhanced resistance to foodstuff and detergents.

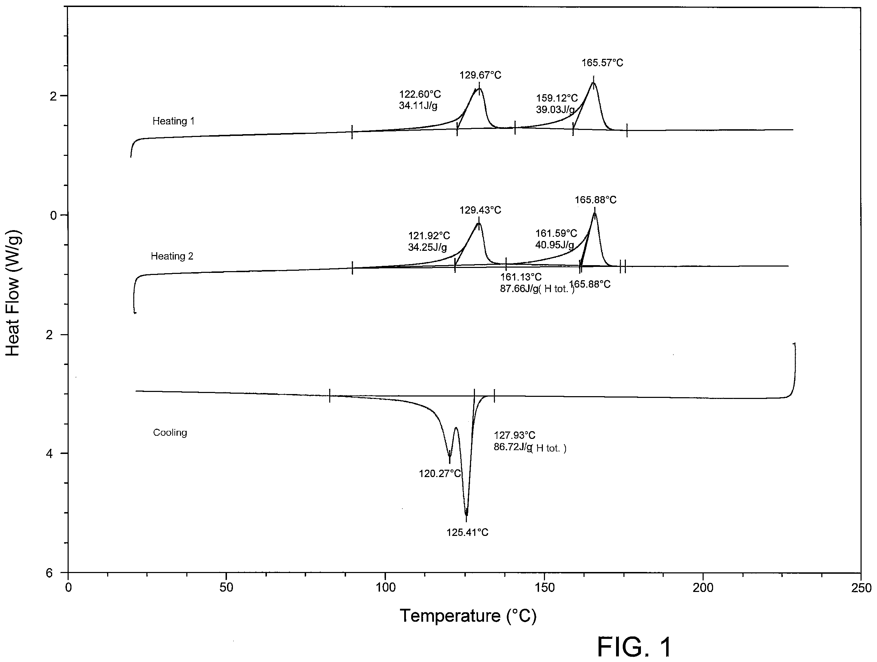

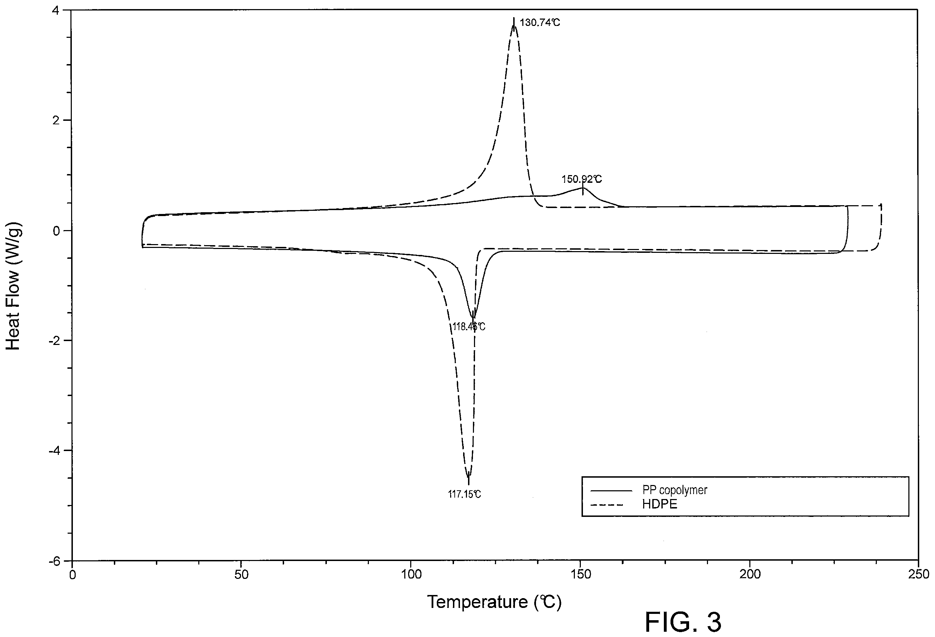

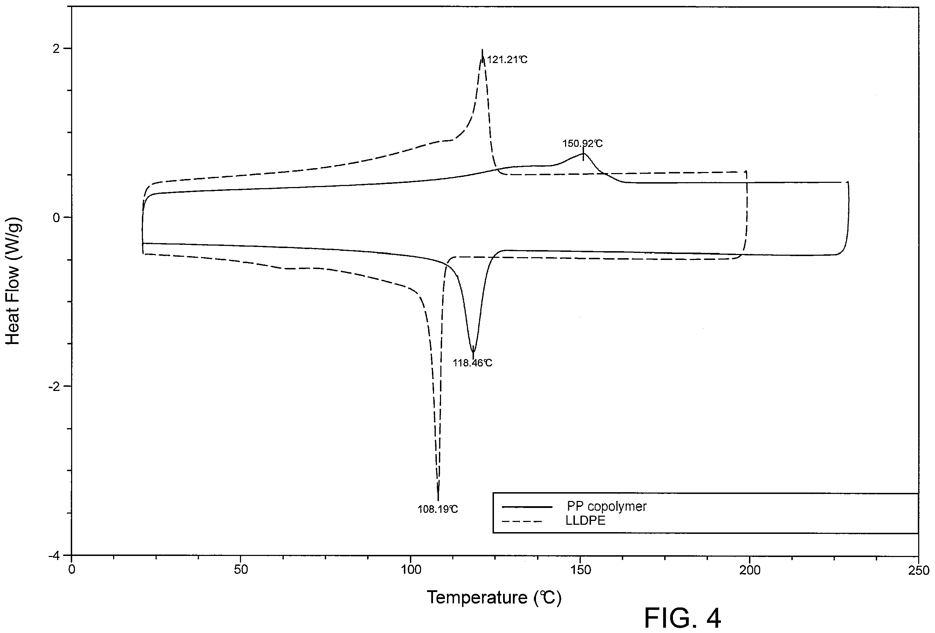

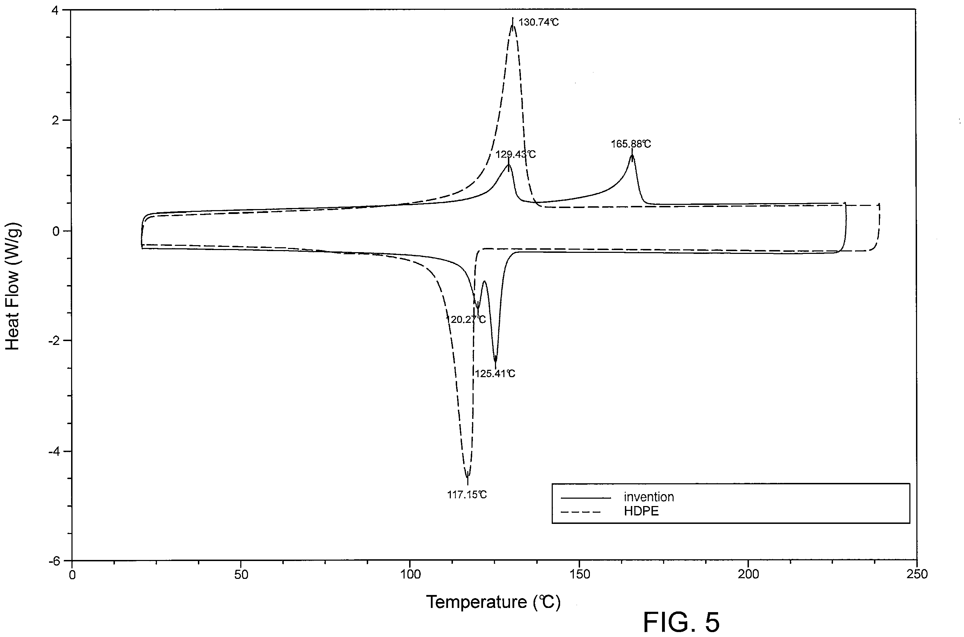

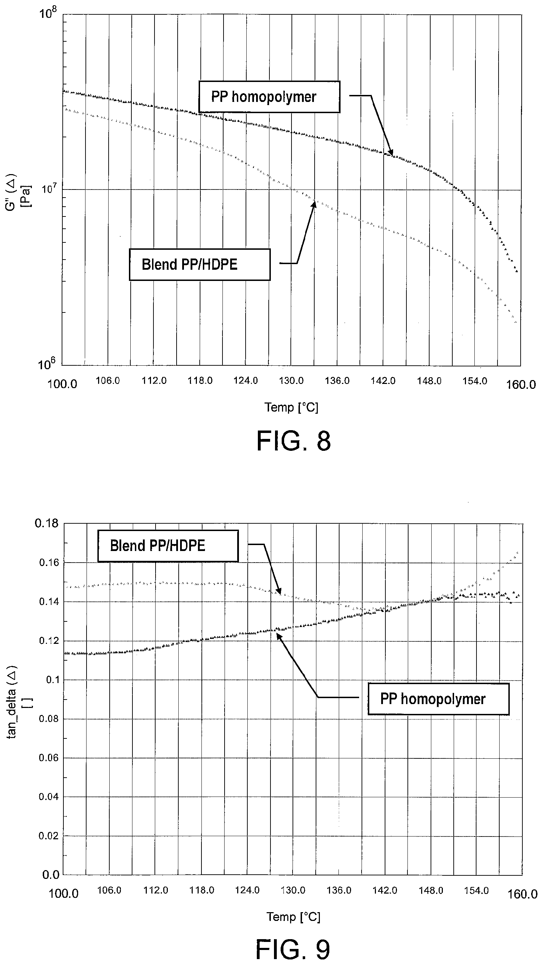

Further features and effects of blend materials according to the invention and the components thereof are shown in Figures 1-9.

Figure 1 shows DSC curves (obtained by Differential Scanning Calorimetry) of a material according to the invention, namely a blend material comprising a PP block copolymer, HDPE and talc.

In particular, Figure 1 shows the heat flow as a function of temperature, i.e. the amount of energy input required to reach/maintain each temperature, during a first heating of the material ("Heating 1": performed on the material directly coming from the manufacturing process thereof), during a following second heating of the same material previously heated and then cooled ("Heating 2"), and during a cooling of the material ("Cooling").

The heating DSC curves show two characteristic peaks, associated to HDPE (at about 129°C) and PP copolymer (at about 165°C) respectively, and disclose an enlarged temperature range wherein softening of the material occurs and the material is accordingly suitable for thermoforming.

The cooling SC curve show also a relatively large solidification/crystallization window, which is an advantageous feature in the cooling step of the thermoforming manufacturing process.

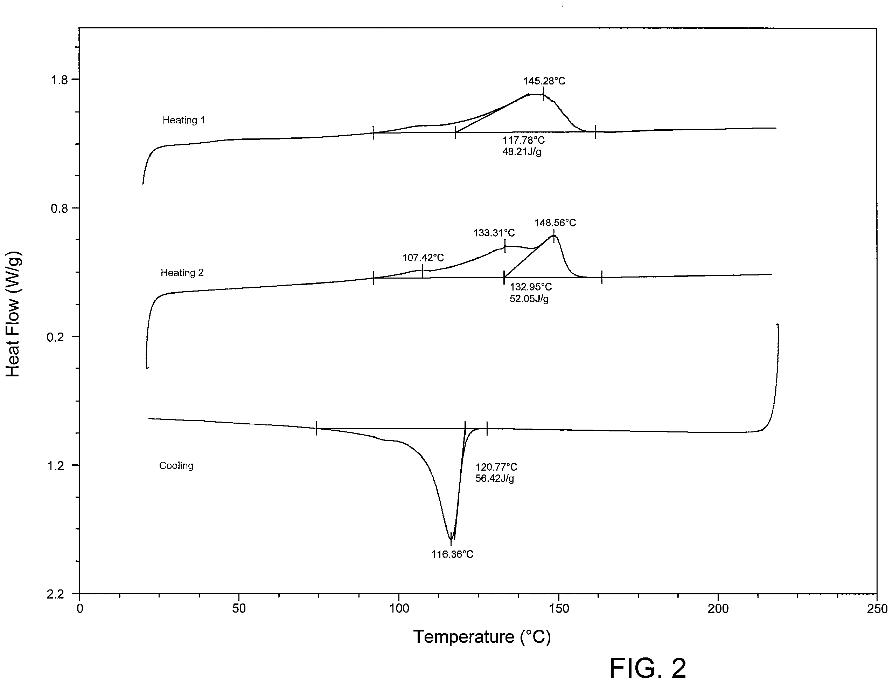

Figure 2 shows similar DSC curves of another material according to the invention, namely a blend material comprising a PP random copolymer and a low density polyethylene (LDPE), and containing 20 phc talc as a filler.

Figure 2 discloses that also the material of Figure 2 features an improved thermoforming window, so confirming the advantageous effect of the invention.

The advantageous effect of the invention on the thermoforming window of PP based materials is even more evident by the comparison curves of Figures 3 to 5, which show DSC curves (during a heating and cooling cycle) of different materials.

In particular, Figures 3 and 4 show the DSC curves of a PP copolymer (solid lines) in comparison with a HDPE and a LLDPE (dotted lines) respectively; while Figure 5 shows the DSC curves of a material according to the invention (comprising a PP copolymer, HDPE, talc; solid lines), again compared with a traditional HDPE (dotted lines). It is clear the advantageous effect of the invention in the extension of the phase transition temperature ranges in both heating and cooling, which result in an improved thermoforming process.

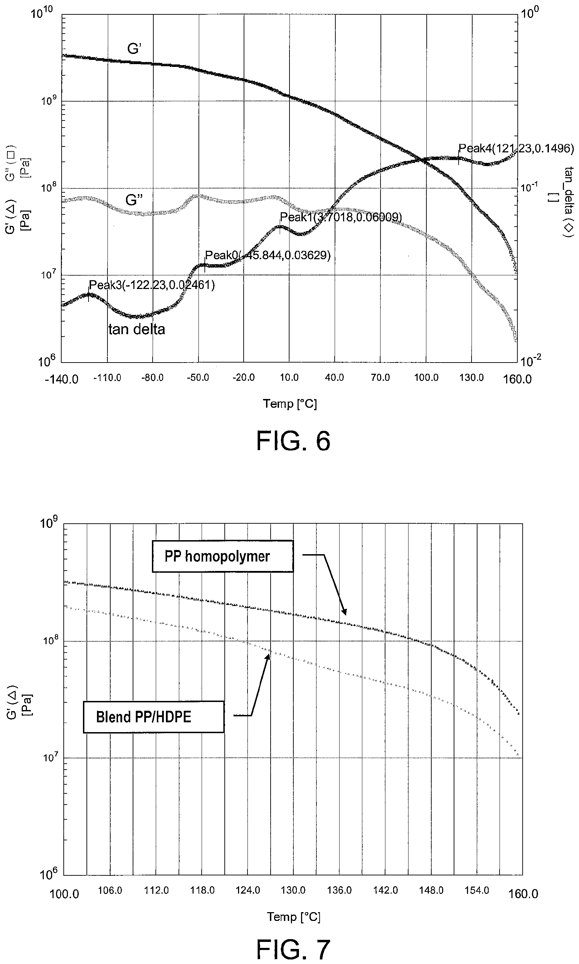

Figures 6 to 9 show other features of the material according to the invention compared with traditional materials.

In particular, Figure 6 shows some mechanical characteristics (shear storage modulus G'; shear loss modulus G"; tan delta) of a material according to the invention, comprising a PP block copolymer, HDPE and talc.

Figure 7 to 9 compare each of the above mechanical features of the invention material with those of a single-component traditional material, in particular a PP homopolymer.

From Figure 7 to 9 it can be appreciated the favourable effect, with respect to the PP homopolymer, of both using a PP copolymer instead of the PP homopolymer, as well as using a blend of PP copolymer and HDPE.

The invention is further described by way of example in the following nonlimiting embodiments, with reference to the accompanying drawings in which:
- Figures 1 to 9 are diagrams showing different characteristics of materials used according to the invention with respect to prior art materials (as previously discussed);

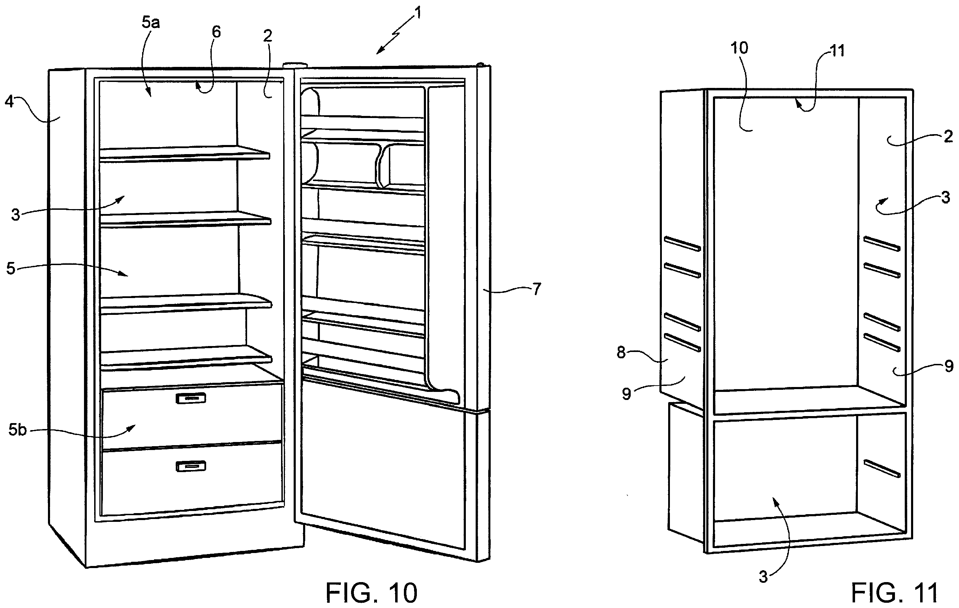

- Figure 10 is a simplified, schematic perspective view of a refrigerator appliance according to the invention;
- Figure 11 is a schematic perspective view of a liner, in particular a cabinet liner, of the refrigerator appliance of figure 10;

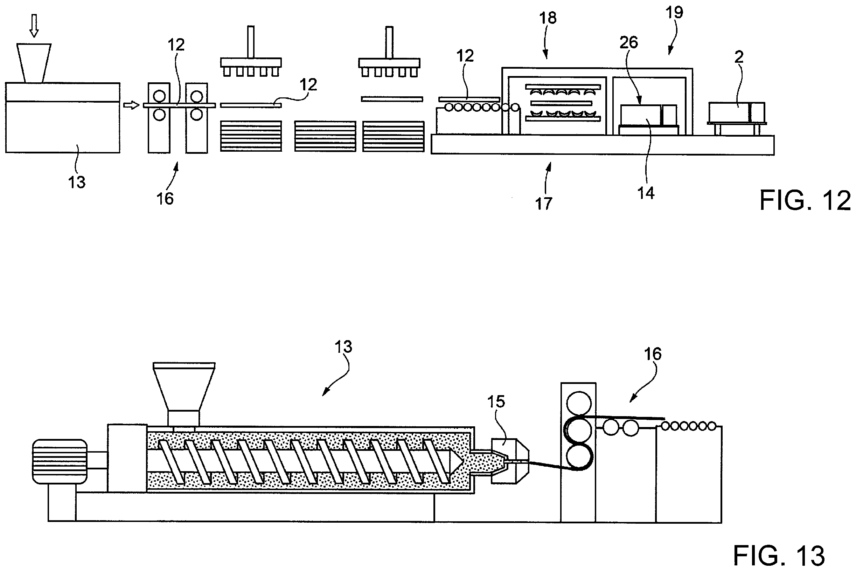

- Figure 12 is a schematic representation of the main steps of a method according to the invention for manufacturing the liner of figure 11, as well as other plastic liners of refrigerator appliances;

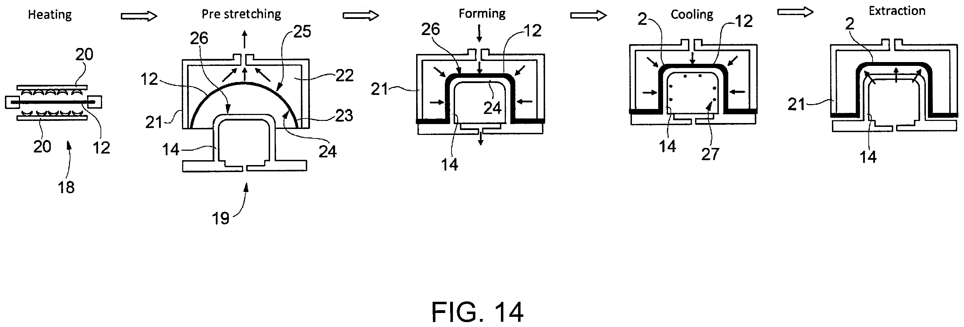

- Figures 13 and 14 show in greater details some steps of the method according to the invention, in particular of an extrusion process and a thermoforming process which are part of the method of figure 12.

In Figure 10, it is indicated as a whole with reference numeral 1 a refrigerator appliance 1 having at least one inner plastic liner 2 defining at least one inner hollow compartment 3.

The appliance 1 comprises a hollow cabinet 4 internally provided with at least one cell 5, and having a front opening 6 closed by a door 7.

In the exemplary embodiment of Figure 10, the appliance 1 is a combined fridge/freezer appliance and comprises a single cabinet 4 housing a refrigerator cell 5a and a freezer cell 5b, closed by respective doors 7.

With reference also to Figure 11, the cells 5 are advantageously defined by respective compartments 3 of the liner 2, which in this case is advantageously a monolithic cabinet liner.

Hereinbelow, reference is made by way of example to a cabinet liner, but it is clear that the following description applies to any other liner, for example a single cell liner or a door liner, of a refrigerator appliance.

The liner 2 comprises a monolithic hollow body 8 shaped to define one or more (two, in the example of Figure 11) compartments 3; each compartment 3 is advantageously delimited by lateral walls 9 projecting from a back wall 10 and has a front opening 11 opposite to the bottom wall 10.

The liner 2, i.e. the body 8, is made of a plastic (polymeric) material, in particular a polypropylene-based blend material.

The blend material and its components have been previously described.

As previously described, the liner 2 is made of a blend material comprising a physical mixture of a propylene-ethylene copolymer; a polymer selected in the group consisting of PE and EVA; and optionally at least one filler, for example talc or calcium carbonate or kaolin clay.

According to the invention, the polymer blended with the propylene-ethylene copolymer is mixed with the propylene-ethylene copolymer in an amount ranging from 23 to 50 phr (parts per hundred resin).

Preferably, the polymer blended with the ethylene-propylene copolymer is a high density polyethylene (HDPE).

As already mentioned, the propylene-ethylene copolymer of the invention can be either a random copolymer or a block copolymer.

In particular, if the propylene-ethylene copolymer is a random copolymer, then the copolymer advantageously has a content of ethylene units ranging between about 1% and about 8% w/w, more advantageously between about 2% and about 6% w/w; if the propylene-ethylene copolymer is a block copolymer, then the copolymer advantageously has a content of ethylene units ranging between about 5% and about 25% w/w, more advantageously between about 5% and about 12% w/w.

The material optionally comprises the polypropylene-ethylene copolymer as a main component, and also homo-polypropylene (polypropylene homo-polymer), preferably in an amount ranging between about 0% and about 25% w/w with respect to the PP copolymer and more preferably in an amount ranging between about 0% and about 15% w/w.

Optionally, the blend material comprises at least one filler, in particular a mineral filler, preferably in an amount ranging from 5 to 50 phc (parts per hundred compound).

Advantageously, the filler is a lamellar or fibrolamellar filler such as talc or kaolin clay; or a granular filler such as calcium carbonate.

Optionally, the material comprises additives, like antioxidant chemicals, lubricants, processing agents, and small percentages of other fillers; and/or titanium dioxide.

The liner 2 is advantageously manufactured by the method described hereinbelow with reference to Figures 12 to 14.

The manufacturing method of the invention advantageously comprises (Figure 12) the steps of:
- preparing the blend material of the liner 2, advantageously by compounding the propylene-ethylene copolymer with the polymer selected in the group of PE and EVA and optionally with the filler(s);
- extruding the material into sheets 12, by using an extruder 13;
- thermoforming a sheet 12 by means of a male mold 14 to shape the liner 2.

In a preferred embodiment, the material is prepared directly in the extruding step: all the components, in particular the filler(s) and the PP copolymer (polypropylene-ethylene copolymer), are preferably compounded in the extruder 13. A twin-screw co-rotating extruder may be advantageously used.

However, some (or even all) components can also be pre-mixed in a mixing step before the extrusion step.

As shown in Figure 13, the extruder 13 preferably has a plane dye 15 to produce a thin, flat planar flow.

Since the extruding process can generate, inside the material, internal stresses that can then be released at high temperature, during the following thermoforming process, it is advantageous to control the extruding process in order to obtain a nearly unoriented sheet; controlling of the extruding process is well known in the art, so it will not be described in more details.

The extruded material which exit from the dye 15 is preferably pulled through a rolling unit 16, comprising a set of cooling rolls and a calender, where the material is cut into sheets 12, the sheets 12 are cooled and the final thickness of each sheet 12 is determined precisely. The sheets 12 are then preferably stacked.

Each sheet 12 comprises, and preferably consists of, a single, substantially uniform layer of the polypropylene-based material. In another advantageous embodiment, in order to improve the final product surface appearance, each sheet 12 comprises, and preferably consists of, a main layer, made of the above described polypropylene-based material, and a glossy or semiglossy covering layer, covering a face of the main layer and made of neat polypropylene or a PP compound with glossy appearance. Advantageously, the covering layer is co-extruded or laminated with the main layer.

Each individual sheet 12 is then supplied to a thermoforming section 17 (Figure 12), comprising a heating unit 18 and a forming unit 19.

In the thermoforming section 17, the sheet 12 is first heated, for example by passing through the heating unit 18; and then shaped by thermoforming in the forming unit 19 to form the liner 2.

With reference also to Figure 14, in the heating unit 18, the sheet 12 is heated to a predetermined operating temperature (forming temperature) at which the material is softened to a substantially rubbery state.

Advantageously, the operating temperature is between about 125°C and about 155°C.

The sheet 12 is preferably advanced through the heating unit 18, having upper and lower heaters 20. The heaters 20 preferably (ma not necessarily) comprise infrared (IR) heating sources.

In order to reach a high efficiency, the heaters 20 have preferably an emission wavelength ranging between 2.9 and 4.2 microns (3450÷2380 cm-1), with the highest emission in the range 3.2-3.8 microns (3125-2630 cm-1), corresponding to the absorbing range for PP polymers.

Once the sheet material has reached the predetermined operating (forming) temperature, the material is in a substantially rubbery state and the heated, softened sheet 12 is moved to the forming unit 19, in particular inside a pressure box 21 or bell which houses the male mold 14, having the shape of the liner 2 to form.

For example, in the preferred embodiments of Figure 14, the sheet 12 is positioned inside a vacuum chamber 22 of the pressure box 21 and the sheet 12 is advantageously clamped along its peripheral edge 23 in order to hold tightly the sheet 12. The clamped sheet 12 divides the vacuum chamber 22 of the pressure box 21 into two zones delimited by opposite faces of sheet 12: a first (inner) face 24, facing the male mold 14 and intended to define, after thermoforming, an inner surface of the liner 2; and a second (outer) face 25, opposite to the first face 24 and intended to define, after thermoforming, an outer surface of the liner 2.

Advantageously, in the pressure box 21 the sheet 12 is first subjected to a pre-stretching step, i.e. the sheet 12 is pre-stretched; and then the pre-stretched sheet 12 is vacuum formed onto the male mold 14.

For pre-stretching the sheet 12, vacuum is applied in the vacuum chamber 22 on the side of the second (outer) face 25 of the sheet 12.

For multi-cavity liners, such as combined cabinet liners for refrigerator and freezer, a double suction is advantageously performed and the sheet is blown into a so called "double bubble" (having two adjacent cavities) pre-stretching.

Once the sheet 12 is suitably pre-stretched, the male mold 14 is moved in the vacuum chamber 22 against the pre-stretched sheet 12, which is draped around an outer shaping surface 26 of the mold 14.

Advantageously, the mold 14 (in particular the shaping surface 26 thereof) is at a temperature lower than the recrystallization temperature of the PP copolymer. Preferably, the temperature of the mold 14 is about 90-110°C, for example around 100°C.

Vacuum is then applied on the side of the first face 24 of the sheet 12, for example through suitable inner channels in the mold 14, so as to draw the sheet 12 against the shaping surface 26 of the mold 14.

The differential pressure against the sheet 12 is amplified if the pressure inside the pressure box 21 is increased: thus, a compressed gas stream (air) can be advantageously injected in the pressure box 21, on the side of the second face 25 of the sheet 12, simultaneously with the vacuum (acting on the first face 24 of the sheet 12); in this way, it is possible to better replicate even small details on the shaping surface 26 of the mold 14. The sheet pre-stretching in combination with the forming pressure give a more uniform material distribution which is favorable to form complex geometries and undercuts.

Additional draft angles can be provided for very deep parts.

The sheet 12 adheres to the shaping surface 26 of the male mold 14 and assume the shape thereof.

The formed sheet 12, still contacting the shaping surface 26 of the mold 14, is then cooled to harden and form the liner 2, for example by blowing air onto the face 25 and/or by circulating a coolant in cooling conduits 27 inside the male mold 14.

Once sufficiently cooled, the sheet 12, having the shape of the liner 2, is separated from the male mold 14 (for example by blowing air through the inner channels of the male mold 14), and extracted from the pressure box 21.

The additional energy used in the heating step for softening the material should be removed efficiently in order to keep a pace corresponding to short production cycles. An additional cooling step can be added after extraction of the liner 2 from the thermoforming section 17 and it is very useful for thick thermoformed parts. Preferably, the warm rigid liner 2 is hence supplied to an additional cooling station (not shown) and cooled in order to reach a temperature that doesn't cause any further deformation; then the liner 2 is advantageously moved to a trimming and cutting unit (not shown) for removing edges and other scraps.

Clearly, further changes may be made to the refrigerator appliance and to the method for manufacturing the liner of the refrigerator appliance described herein without, however, departing from the scope of the present invention as defined by the enclosed Claims.

## Claims

1. A refrigerator appliance (1) having at least one internal liner (2), in particular a cabinet liner or a door liner, defining an inner compartment (3); wherein the liner (2) is made of a blend material comprising a polymer portion defining a resin fraction and including a physical mixture of a propylene-ethylene copolymer and a polymer selected in the group consisting of polyethylene (PE) and ethylene vinyl acetate (EVA);
the refrigerator appliance being **characterised in that** the polymer blended with the propylene-ethylene copolymer is mixed with the propylene-ethylene copolymer in an amount ranging from 23 to 50 phr (parts per hundred resin).

2. The refrigerator appliance according to Claim 1, wherein the ethylene-propylene copolymer has propylene as a main component and is either a random copolymer or a block copolymer.

3. The refrigerator appliance according to Claim 1 or 2, wherein the propylene-ethylene copolymer is a random copolymer and has a content of ethylene units ranging between about 1% and about 8% w/w.

4. The refrigerator appliance according to Claim 3, wherein the propylene-ethylene copolymer is a random copolymer and has a content of ethylene units ranging between about 2% and about 6% w/w.

5. The refrigerator appliance according to Claim 1 or 2, wherein the propylene-ethylene copolymer is a block copolymer and has a content of ethylene units ranging between about 5% and about 25% w/w.

6. The refrigerator appliance according to Claim 5, wherein the propylene-ethylene copolymer is a block copolymer and has a content of ethylene units ranging between about 5% and about 12% w/w.

7. The refrigerator appliance according to one of the preceding Claims, wherein the polymer blended with the ethylene-propylene copolymer is a high density polyethylene (HDPE).

8. The refrigerator appliance according to one of the preceding Claims, wherein the blend material comprises at least one mineral filler, compounded with the polymer blend in an amount ranging from 5 to 50 phc (parts per hundred compound).

9. The refrigerator appliance according to Claim 8, wherein the filler is a lamellar or fibrolamellar filler.

10. The refrigerator appliance according to Claim 8, wherein the filler is talc, calcium carbonate or kaolin clay.

11. The refrigerator appliance according to one of the preceding Claims, wherein the blend material comprises also polypropylene homo-polymer in an amount ranging between about 0% and about 25% w/w.

12. A method for manufacturing a liner (2), in particular a cabinet liner or a door liner, of a refrigerator appliance (1); the method comprising the steps of:
- preparing a blend material comprising a polymer portion defining a resin fraction and including a physical mixture of a propylene-ethylene copolymer and a polymer selected in the group consisting of: polyethylene (PE) and ethylene vinyl acetate (EVA); wherein the polymer blended with the propylene-ethylene copolymer is mixed with the propylene-ethylene copolymer in an amount ranging from 23 to 50 phr (parts per hundred resin);
- extruding the blend material into sheets (12);
- thermoforming a sheet (12) of said blend material to shape the liner (2).

13. The method according to Claim 12, wherein the ethylene-propylene copolymer has propylene as a main component and is either a random copolymer or a block copolymer.

14. The method according to Claim 12 or 13, wherein the propylene-ethylene copolymer is a random copolymer and has a content of ethylene units ranging between about 1% and about 8% w/w.

15. The method according to Claim 14, wherein the propylene-ethylene copolymer is a random copolymer and has a content of ethylene units ranging between about 2% and about 6% w/w.

16. The method according to Claim 12 or 13, wherein the propylene-ethylene copolymer is a block copolymer and has a content of ethylene units ranging between about 2% and about 25% w/w.

17. The method according to Claim 16, wherein the propylene-ethylene copolymer is a block copolymer and has a content of ethylene units ranging between about 5% and about 12% w/w.

18. The method according to one of Claims 12 to 17, wherein the polymer blended with the ethylene-propylene copolymer is a high density polyethylene (HDPE).

19. The method according to one of Claims 12 to 18, wherein the blend material comprises at least one mineral filler compounded with the polymer blend in an amount ranging from 5 to 50 phc (parts per hundred compound).

20. The method according to Claim 19, wherein the filler is a lamellar or fibrolamellar filler.

21. The method according to Claim 19, wherein the filler is talc, calcium carbonate or kaolin clay.

22. The method according to one of Claims 12 to 21, wherein the blend material comprises also polypropylene homo-polymer in an amount ranging between about 0% and about 25% w/w.

23. The method according to one of Claims 12 to 22, wherein the step of thermoforming said sheet (12) of blend material is performed onto a male mold (14).

## Patentansprüche

1. Kühlschrankgerät (1) mit mindestens einer Innenauskleidung (2), insbesondere einer Schrankauskleidung oder einer Türauskleidung, die ein Innenabteil (3) definiert; wobei die Auskleidung (2) aus einem Mischungsmaterial hergestellt ist, das einen Polymeranteil umfasst, der eine Harzfraktion definiert und ein physikalisches Gemisch aus einem Propylen-Ethylen-Copolymer und einem Polymer beinhaltet, das ausgewählt ist aus der Gruppe bestehend aus Polyethylen (PE) und Ethylen-Vinylacetat (EVA);
wobei das Kühlschrankgerät **dadurch gekennzeichnet ist, dass** das mit dem Propylen-Ethylen-Copolymer vermischte Polymer mit dem Propylen-Ethylen-Copolymer in einer Menge im Bereich von 23 bis 50 phr (Teile pro Hundert Harz) gemischt ist.

2. Kühlschrankgerät nach Anspruch 1, wobei das Ethylen-Propylen-Copolymer Propylen als Hauptkomponente aufweist und entweder ein statistisches Copolymer oder ein Block-Copolymer ist.

3. Kühlschrankgerät nach Anspruch 1 oder 2, wobei das Propylen-Ethylen-Copolymer ein statistisches Copolymer ist und einen Gehalt an Ethylen-Einheiten im Bereich zwischen etwa 1 Gew.-% und etwa 8 Gew.-% aufweist.

4. Kühlschrankgerät nach Anspruch 3, wobei das Propylen-Ethylen-Copolymer ein statistisches Copolymer ist und einen Gehalt an Ethylen-Einheiten im Bereich zwischen etwa 2 Gew.-% und etwa 6 Gew.-% aufweist.

5. Kühlschrankgerät nach Anspruch 1 oder 2, wobei das Propylen-Ethylen-Copolymer ein Block-Copolymer ist und einen Gehalt an Ethylen-Einheiten im Bereich zwischen etwa 5 Gew.-% und etwa 25 Gew.-% aufweist.

6. Kühlschrankgerät nach Anspruch 5, wobei das Propylen-Ethylen-Copolymer ein Block-Copolymer ist und einen Gehalt an Ethylen-Einheiten im Bereich zwischen etwa 5 Gew.-% und etwa 12 Gew.-% aufweist.

7. Kühlschrankgerät nach einem der vorstehenden Ansprüche, wobei das mit dem Ethylen-Propylen-Copolymer vermischte Polymer ein Polyethylen von hoher Dichte (HDPE) ist.

8. Kühlschrankgerät nach einem der vorstehenden Ansprüche, wobei das Mischungsmaterial mindestens einen mineralischen Füllstoff umfasst, der mit der Polymermischung in einer Menge im Bereich von 5 bis 50 phc (Teile pro Hundert Verbindung) compoundiert ist.

9. Kühlschrankgerät nach Anspruch 8, wobei der Füllstoff ein lamellärer oder fibrolamellärer Füllstoff ist.

10. Kühlschrankgerät nach Anspruch 8, wobei der Füllstoff Talk, Calciumcarbonat oder Kaolinton ist.

11. Kühlschrankgerät nach einem der vorstehenden Ansprüche, wobei das Mischungsmaterial auch Polypropylen-Homopolymer in einer Menge im Bereich zwischen etwa 0 Gew.-% und etwa 25 Gew.-% umfasst.

12. Verfahren zum Herstellen einer Auskleidung (2), insbesondere einer Schrankauskleidung oder einer Türauskleidung, eines Kühlschrankgeräts (1); wobei das Verfahren die folgenden Schritte umfasst:
- Herstellen eines Mischungsmaterials, das einen Polymeranteil umfasst, der eine Harzfraktion definiert und ein physikalisches Gemisch aus einem Propylen-Ethylen-Copolymer und einem Polymer beinhaltet, das ausgewählt ist aus der Gruppe bestehend aus: Polyethylen (PE) und Ethylen-Vinylacetat (EVA); wobei das mit dem Propylen-Ethylen-Copolymer vermischte Polymer mit dem Propylen-Ethylen-Copolymer in einer Menge im Bereich von 23 bis 50 phr (Teile pro Hundert Harz) gemischt ist;
- Extrudieren des Mischungsmaterials zu Platten (12);
- Thermoformen einer Platte (12) des Mischungsmaterials, um die Auskleidung (2) zu formen.

13. Verfahren nach Anspruch 12, wobei das Ethylen-Propylen-Copolymer Propylen als Hauptkomponente aufweist und entweder ein statistisches Copolymer oder ein Block-Copolymer ist.

14. Verfahren nach Anspruch 12 oder 13, wobei das Propylen-Ethylen-Copolymer ein statistisches Copolymer ist und einen Gehalt an Ethylen-Einheiten im Bereich zwischen etwa 1 Gew.-% und etwa 8 Gew.-% aufweist.

15. Verfahren nach Anspruch 14, wobei das Propylen-Ethylen-Copolymer ein statistisches Copolymer ist und einen Gehalt an Ethylen-Einheiten im Bereich zwischen etwa 2 Gew.-% und etwa 6 Gew.-% aufweist.

16. Verfahren nach Anspruch 12 oder 13, wobei das Propylen-Ethylen-Copolymer ein Block-Copolymer ist und einen Gehalt an Ethylen-Einheiten im Bereich zwischen etwa 2 Gew.-% und etwa 25 Gew.-% aufweist.

17. Verfahren nach Anspruch 16, wobei das Propylen-Ethylen-Copolymer ein Block-Copolymer ist und einen Gehalt an Ethylen-Einheiten im Bereich zwischen etwa 5 Gew.-% und etwa 12 Gew.-% aufweist.

18. Verfahren nach einem der Ansprüche 12 bis 17, wobei das mit dem Ethylen-Propylen-Copolymer vermischte Polymer ein Polyethylen von hoher Dichte (HDPE) ist.

19. Verfahren nach einem der Ansprüche 12 bis 18, wobei das Mischungsmaterial mindestens einen mineralischen Füllstoff umfasst, der mit der Polymermischung in einer Menge im Bereich von 5 bis 50 phc (Teile pro Hundert Verbindung) compoundiert ist.

20. Verfahren nach Anspruch 19, wobei der Füllstoff ein lamellärer oder fibrolamellärer Füllstoff ist.

21. Verfahren nach Anspruch 19, wobei der Füllstoff Talk, Calciumcarbonat oder Kaolinton ist.

22. Verfahren nach einem der Ansprüche 12 bis 21, wobei das Mischungsmaterial auch Polypropylen-Homopolymer in einer Menge im Bereich zwischen etwa 0 Gew.-% und etwa 25 Gew.-% umfasst.

23. Verfahren nach einem der Ansprüche 12 bis 22, wobei der Schritt des Thermoformens der Platte (12) aus Mischungsmaterial auf einer Patrize (14) durchgeführt wird.

## Revendications

1. Réfrigérateur (1) ayant au moins une doublure interne (2), en particulier une doublure d'armoire ou une doublure de porte, définissant un compartiment interne (3) ; dans lequel la doublure (2) est faite d'un matériau de mélange comprenant une partie polymère définissant une fraction de résine et comprenant un mélange physique d'un copolymère propylène-éthylène et d'un polymère sélectionné dans le groupe constitué du polyéthylène (PE) et de l'éthylène acétate de vinyle (EVA) ;
le réfrigérateur étant **caractérisé en ce que** le polymère mélangé avec le copolymère propylène-éthylène est mélangé avec le copolymère propylène-éthylène en une quantité dans la plage de 23 et 50 phr (parties pour cent de résine) .

2. Réfrigérateur selon la revendication 1, dans lequel le copolymère éthylène-propylène présente du propylène comme composant principal et est soit un copolymère statistique, soit un copolymère à blocs.

3. Réfrigérateur selon la revendication 1 ou 2, dans lequel le copolymère propylène-éthylène est un copolymère statistique et a une teneur en motifs éthylène dans la plage entre environ 1 % et environ 8 % p/p.

4. Réfrigérateur selon la revendication 3, dans lequel le copolymère propylène-éthylène est un copolymère statistique et a une teneur en motifs éthylène dans la plage entre environ 2 % et environ 6 % p/p.

5. Réfrigérateur selon la revendication 1 ou 2, dans lequel le copolymère propylène-éthylène est un copolymère à blocs et a une teneur en motifs éthylène dans la plage entre environ 5 % et environ 25 % p/p.

6. Réfrigérateur selon la revendication 5, dans lequel le copolymère propylène-éthylène est un copolymère à blocs et a une teneur en motifs éthylène dans la plage entre environ 5 % et environ 12 % p/p.

7. Réfrigérateur selon l'une des revendications précédentes, dans lequel le polymère mélangé avec le copolymère éthylène-propylène est un polyéthylène haute densité (HDPE).

8. Réfrigérateur selon l'une des revendications précédentes, dans lequel le matériau de mélange comprend au moins une charge minérale, compoundée avec le mélange polymère en une quantité dans la plage de 5 à 50 phc (parties pour cent de composé).

9. Réfrigérateur selon la revendication 8, dans lequel la charge est une charge lamellaire ou fibrolamellaire.

10. Réfrigérateur selon la revendication 8, dans lequel la charge est du talc, du carbonate de calcium ou de l'argile de kaolin.

11. Réfrigérateur selon l'une des revendications précédentes, dans lequel le matériau de mélange comprend également un homopolymère de polypropylène en une quantité dans la plage entre environ 0 % et environ 25 % p/p.

12. Procédé de fabrication d'une doublure (2), en particulier d'une doublure d'armoire ou d'une doublure de porte, d'un réfrigérateur (1) ; le procédé comprenant les étapes de :
- préparation d'un matériau de mélange comprenant une partie polymère définissant une fraction de résine et comprenant un mélange physique d'un copolymère propylène-éthylène et d'un polymère choisi dans le groupe constitué de : polyéthylène (PE) et éthylène acétate de vinyle (EVA) ; dans lequel le polymère mélangé avec le copolymère propylène-éthylène est mélangé avec le copolymère propylène-éthylène en une quantité dans la plage de 23 à 50 phr (parties pour cent de résine) ;
- extrusion du matériau de mélange en des feuilles (12) ;
- thermoformage d'une feuille (12) dudit matériau de mélange pour façonner la doublure (2).

13. Procédé selon la revendication 12, dans lequel le copolymère éthylène-propylène présente du propylène comme composant principal et est soit un copolymère statistique, soit un copolymère à blocs.

14. Procédé selon la revendication 12 ou 13, dans lequel le copolymère propylène-éthylène est un copolymère statistique et a une teneur en motifs éthylène dans la plage entre environ 1 % et environ 8 % p/p.

15. Procédé selon la revendication 14, dans lequel le copolymère propylène-éthylène est un copolymère statistique et a une teneur en motifs éthylène dans la plage entre environ 2 % et environ 6 % p/p.

16. Procédé selon la revendication 12 ou 13, dans lequel le copolymère propylène-éthylène est un copolymère à blocs et a une teneur en motifs éthylène dans la plage entre environ 2 % et environ 25 % p/p.

17. Procédé selon la revendication 16, dans lequel le copolymère propylène-éthylène est un copolymère à blocs et a une teneur en motifs éthylène dans la plage entre environ 5 % et environ 12 % p/p.

18. Procédé selon l'une des revendications 12 à 17, dans lequel le polymère mélangé avec le copolymère éthylène-propylène est un polyéthylène haute densité (HDPE).

19. Procédé selon l'une des revendications 12 à 18, dans lequel le matériau de mélange comprend au moins une charge minérale, compoundée avec le mélange polymère en une quantité dans la plage de 5 à 50 phc (parties pour cent de composé).

20. Procédé selon la revendication 19, dans lequel la charge est une charge lamellaire ou fibrolamellaire.

21. Procédé selon la revendication 19, dans lequel la charge est du talc, du carbonate de calcium ou de l'argile de kaolin.

22. Procédé selon l'une des revendications 12 à 21, dans lequel le matériau de mélange comprend également un homopolymère de polypropylène en une quantité dans la plage entre environ 0 % et environ 25 % p/p.

23. Procédé selon l'une des revendications 12 à 22, dans lequel l'étape de thermoformage de ladite feuille (12) de matériau de mélange est effectuée sur un moule mâle (14) .
